# EUROPEAN PATENT SPECIFICATION

(11) **EP 1 123 648 B1**
(45) Date of publication and mention of the grant of the patent: **31.08.2005**
(21) Application number: 00102756.4
(22) Date of filing: 10.02.2000
(51) Int. Cl.: A01B 59/06, A01C 17/00

(54) **System for fully automatic dosage in agricultural machinery**
System zur vollautomatischen Dosierung in landwirtschaftlichen Maschinen
Sytème pour le dosage automatique dans les machines agricoles

(43) Date of publication of application: 16.08.2001
(73) Proprietor: A.P. Laursen A/S, DK-7171 Uldum (DK)
(72) Inventor: Laursen, Nils Jorn, 8722 Hedensted (DK)
(74) Representative: Roerboel, Leif

(56) References cited:
- EP-A- 0 537 857
- EP-A- 0 797 082
- GB-A- 2 304 910
- US-A- 4 722 408

## Description

### TECHNICAL FIELD

The present invention relates to agricultural machinery and more particularly to automatic dosage control in spreaders as set forth in the preamble of claim 1, according to the prior art disclosed by EP-A-0 537 857.

### DESCRIPTION OF PRIOR ART

Fully automatic dosage of granular or powdery material, such as fertilisers, is well known within the art. Such prior art systems typically utilise a number of weighing cells to register the amount of material present in a supply container, said weighing cells registering the relative displacement between a second frame rigidly connected to the machinery (for instance a tractor) and a first rigid frame carrying said supply container, where said first frame is suspended from said second frame using appropriate resilient means. A system as described above may provide reliable measurements under static conditions, but if said second frame is being accelerated for instance during movement of said machinery over uneven terrain, the resulting relative displacements between the first and second frames will lead to erroneous measurements of the amount (weight) of material present in the container. In order to avoid such problems, it is well known within the art to apply a reference weighing cell attached to a body of well-defined mass, such that if said reference cell due to accelerations of the system registers a weight differing from the correct weight of said body, corresponding corrections can be performed on the measurements carried out by said number of weighing cells.

It is a disadvantage with such prior art systems as described above that these systems utilise more than one weighing cell to register the weight of the material in the supply container. It is a further disadvantage that such prior art systems utilise the above-mentioned reference cell.

### SUMMARY OF THE INVENTION

It is the object of the present invention to provide a system comprising only one weighing cell and no reference cell, which system during operation hereof based on the continuos weighing of the amount of material in a supply container is capable of carrying out automatic comparisons between a target dosage and an actual dosage, and where said system based on said comparison is able to perform an automatic adjustment of dosage means, and thereby providing optimal correspondence between a target dosage and an actual dosage.

This object is attained with a system according to the invention as defined in the characterising clause of claim 1. Further characteristic features of the system are defined in the dependent claims.

According to the invention, the system comprises a supply container for a granular or powdery material, such as a fertiliser, said container being supported on a first rigid frame suspended relative to a second rigid frame mounted on the agricultural machinery in such a manner that said first rigid frame can only be displaced substantially translatory and parallel to said second rigid frame, and such that the weight of material in said supply container can be continuously assessed with the aid of one displacement sensitive means, such as a weighing cell, placed between said first and second frames, said displacement sensitive means providing an output signal as a continuos function of time, which is a function of the displacement of said first rigid frame relative to said second rigid frame, which displacement is caused partly by the weight of the material present in the supply container at any given instant of time and partly by random accelerations substantially in the vertical direction of the agricultural machinery - and hence of said second rigid frame - as said machinery moves over the more or less uneven terrain of for instance a field. Said output signal from the displacement sensitive means provides after suitable processing a measure of the instantaneous amount (weight) of material present in said supply container. Thus, the actual dosage of material (for instance measured as the mass of material spread over a given unit area) can be determined based on the estimated amount of material leaving the container within a predetermined time interval. This estimated actual amount of material leaving the container within a predetermined time interval, i.e. the actual change of mass of the container within that time interval, can hereafter be compared with a target amount of material leaving said container within said time interval, i.e. the target change of mass of the container within that time interval, which target amount can be determined based on the target dosage of material (measured as the desired mass of material spread over a unit area), the speed of the agricultural machinery relative to the ground and the transversal spreading range of the spreader. Based on said comparison, it is possible to control said amount of material leaving the container by the application of suitable dosage means, such as controllable valves, so that said amount of material leaving the container within a given time interval will be automatically increased, if it is found to be less than said target amount, and automatically decreased, if it is found to exceed said target amount.

According to the invention, said processing of the output signal from the displacement sensitive means is carried out in such a manner that it removes the random fluctuations in the output signal caused by random accelerations of said second rigid frame, and hence random displacements of said first and second rigid frames relative to each other, as the machinery moves over an uneven terrain. Said processed output signal thus provides an estimated value of the mass (weight) of material left in the supply container at any given moment.

Said processing could comprise the calculation of the running average over time, but other smoothing methods could also be utilised without departing from the scope of the invention as defined by the accompanying claims.

According to the invention, said predetermined time interval between successive assessments of the amount of material present in the supply container can be made to depend on said measured change of material in the supply container, such that if this change is found to be less than a given threshold value, based on for instance the measurement resolution of the weighing cell, said time interval will automatically be increased in order to provide reliable measurements of the change of material in the supply container. Also said time interval could be made to depend on other parameters, such as for instance the distance covered by the machinery within that time interval.

### BRIEF DESCRIPTION OF THE DRAWING

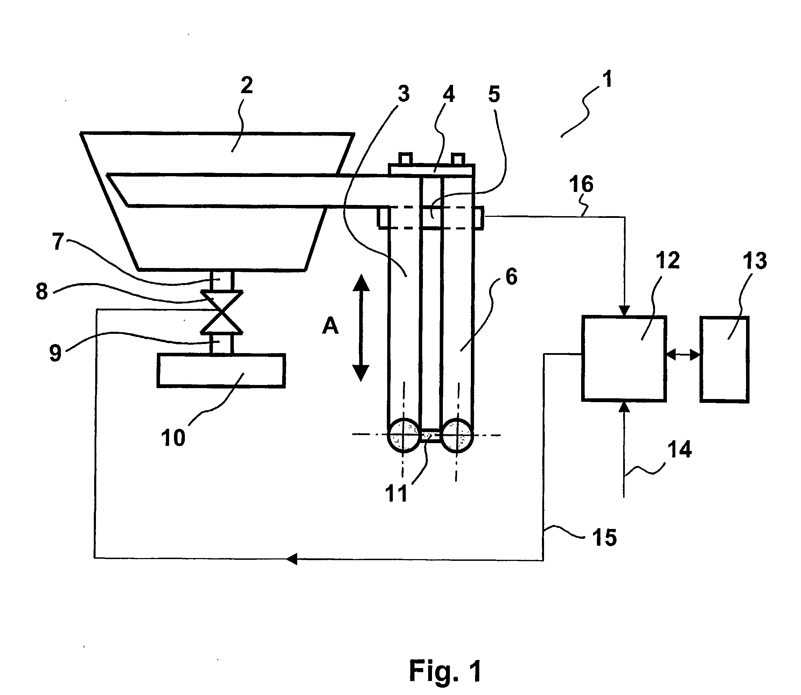

The invention will now be described in more detail with reference to the accompanying drawing, in which
Fig. 1 is a schematic diagram of the dosage control system according to the present invention.

### DETAILED DESCRIPTION OF THE INVENTION

In the following a detailed description of an embodiment of the present invention is given. With reference to figure 1, the system 1 according to the invention comprises basically a supply container 2 for granular or powdery material such as a fertiliser, where said supply container 2 is mounted on a first rigid frame 3 which can undergo substantially translatory and parallel displacements relative to a second rigid frame 6 attached to the machinery, for instance a tractor, as indicated by the arrow A. In order to restrict said displacement of the first rigid frame 3 to take place substantially parallel relative to said second rigid frame 6, said first rigid frame 3 is suspended relative to said second rigid frame 6 partly by means of a number, for instance two, of flat springs 4 located at the upper end of the two frames 3, 6, and partly by double-hinged levers 11 placed at the opposite, lower end of said frames 3, 6. A weighing cell 5 registering the relative translatory displacement between said rigid frames 3, 6 is attached to each of the frames 3, 6 and provides an output signal 16, which is a function of said relative translatory displacement, said output signal being provided to a processor 12 connected to a suitable user interface 13. The processor 12 is furthermore being provided with a signal 14 from suitable velocity sensors (not shown), which sensors register the velocity of the machinery relative to the ground.

The processor 12 provides an output signal 15, which is coupled via suitable driver means (not shown) to one or more controllable valves 8 inserted between the outlet 7 of the container 2 and the inlet of a spreading device 10, which devise 10 spreads the material from the container 2 in a desired pattern on the ground.

The processor 12 carries out (at least) the following functions:
- Based on the output signal from the weighing cell 5, it derives an estimate of the instantaneous mass of material present in the supply container 2. This derivation comprises a suitable averaging or filtering of the output signal 16 from the weighing cell 5 in order to remove the random fluctuations herein.
- Based on said estimate of the instantaneous mass of material in the supply container 2, it calculates the actual change of mass over a given time interval.
- Based on a desired dosage of material specified for instance with the aid of the user interface 13, and the instantaneous velocity of the machinery relative to the ground and on machine and spreader specific data, it calculates the target amount of material leaving the container 2 within said time interval.
- Based on said actual and target change of the amount of material present in the container 2, it determines an error signal 15 to be provided to appropriate driver means in order to control the setting of said dosage means 8 provided between the outlet 7 of the container 2 and the inlet 9 to the spreader 10.

The various machine and spreader specific data and the desired dosage can be updated, for instance via the interface 13, placed at a convenient position in the cabin of for instance a tractor.

Although one specific embodiment of the present invention has been shown and described in the preceding parts of the detailed description, it is understood that a person skilled in the art may conceive other embodiments of the invention without departing from the scope of the invention as defined by the following claims.

## Claims

1. System for fully automatic dosage of granular or powdery material, such as a fertiliser, in agricultural machinery, said system comprising a supply container (2) supported on a first rigid frame (3), which is connected resiliently to a second rigid frame (6) attached to said machinery, so that said first rigid frame (3) is only be displacable substantially translatory and parallel to said second rigid frame (6), said supply container (2) being provided with an outlet (7), which via one or more controllable valve(s) (8) is communicating with a spreading device (10) for spreading said material on the ground, **characterised in that** said dosage being automatically and continuously adjustable during operation of said machinery based on the amount of material present in the hopper, which amount is determinable solely by the output signal (16) provided by a displacement sensitive means (5), said output signal (16) being only a function of the translatory and parallel displacement of said first rigid frame (3) relative to said second rigid frame (6).

2. System according to claim 1, **characterised in that** said measurement of the translatory and parallel displacement of said first rigid frame (3) relative to said second rigid frame (6) is carried out by means of a displacement sensitive means (5) placed substantially between one given point on said first rigid frame (3) and one given point on said second rigid frame (6).

3. System according to claim 1 or 2, **characterised in that** said automatic adjustment of the dosage is being continuously performed during operation with the aid of said controllable valve(s) (8), said valve(s) (8) being provided with a processed output signal (15) derived from an output signal (16) from said displacement sensitive means (5).

4. System according to any of the preceding claims, **characterised in that** said processed output signal (15) is a function of the difference between the actual change of mass of the material in said supply container (2) over a specific time interval and a target change of said mass over said specific time interval.

5. System according to any of the preceding claims, **characterised in that** said specific time interval is being automatically increased, if said actual change of mass during said specific time interval is less than a given first threshold value and/or the distance covered by said machinery within said time interval is less than a given second threshold value.

6. System according to claim 4 or 5, **characterised in that** said target change of mass over said specific time interval is determined based on a target dosage of material, the velocity of said machinery relative to the ground and spreading characteristics for the specific spreader (10) being used.

## Patentansprüche

1. System zur vollautomatischen Dosierung eines granularen oder pulverförmigen Materials wie eines Düngemittels in landwirtschaftlichen Maschinen, wobei das System einen Vorratsbehälter (2) aufweist, der auf einem ersten starren Rahmen (3) in federnder Verbindung mit einem an der Maschine befestigten zweiten starren Rahmen (6) gelagert ist, so dass der erste starre Rahmen (3) im Wesentlichen nur translatorisch und parallel zu dem zweiten starren Rahmen (6) verschiebbar ist, und wobei der Vorratsbehälter (2) mit einem Auslass (7) versehen ist, der über mindestens ein steuerbares Ventil (8) mit einem Streuaggregat (10) zum Verteilen des Materials auf den Boden in Verbindung steht, **dadurch gekennzeichnet, dass** die Dosierung während des Betriebs der Maschine auf der Basis des im Trichter vorrätigen Materialmenge automatisch und kontinuierlich nachstellbar ist, wobei die Menge ausschließlich durch ein Ausgangssignal (16) aus einer verschiebungssensitiven Einrichtung (5) bestimmbar ist, wobei das Ausgangssignal (16) nur eine Funktion der translatorischen und parallelen Verschiebung des ersten starren Rahmens (3) relativ zu dem zweiten starren Rahmen (6) ist.

2. System nach Anspruch 1, **dadurch gekennzeichnet, dass** die Messung der translatorischen und parallelen Verschiebung des ersten starren Rahmens (3) relativ zu dem zweiten starren Rahmen (6) über eine verschiebungssensitive Einrichtung (5) erfolgt, die im Wesentlichen zwischen einem gegebenen Punkt auf dem ersten starren Rahmen (3) und einem gegebenen Punkt auf dem zweiten starren Rahmen (6) angeordnet ist.

3. System nach Anspruch 1 oder 2, **dadurch gekennzeichnet, dass** das automatische Nachstellen der Dosierung durch das mindestens eine steuerbare Ventil (8) kontinuierlich während des Betriebs erfolgt, wobei das mindestens eine Ventil (8) mit einem verarbeiteten Ausgangssignal (15) beaufschlagt wird, das von einem Ausgangssignal (16) aus der verschiebungssensitiven Einrichtung (5) hergeleitet wurde.

4. System nach einem der vorstehenden Ansprüche, **dadurch gekennzeichnet, dass** das verarbeitete Ausgangssignal (15) eine Funktion der Differenz zwischen der effektiven Änderung der Materialmasse im Vorratsbehälter (2) über ein spezifisches Zeitintervall und einer Solländerung dieser Masse über dieses spezifische Zeitintervall hinweg ist.

5. System nach einem der vorstehenden Ansprüche, **dadurch gekennzeichnet, dass** das spezifische Zeitintervall automatisch vergrößert wird, wenn die effektive Massenänderung während des spezifischen Zeitintervalls geringer ist als ein gegebener erster Schwellenwert und/oder die von der Maschine innerhalb des Zeitintervalls zurückgelegte Fahrstrecke geringer ist als ein gegebener zweiter Schwellenwert.

6. System nach Anspruch 4 oder 5, **dadurch gekennzeichnet, dass** die Soll-Massenänderung über das spezifische Zeitintervall hinweg auf der Basis einer Soll-Materialdosierung, der Geschwindigkeit der Maschine relativ zum Boden und der Streucharakteristika des jeweils eingesetzten Streuaggregats (10) bestimmt wird.

## Revendications

1. Système pour le dosage entièrement automatique de matériaux en grains ou en poudre, tels que des engrais, dans une machine agricole, ledit système comprenant un container d'alimentation (2) supporté sur une première armature rigide (3), laquelle est connectée de manière élastique à une seconde armature rigide (6) fixée à ladite machine, de sorte que ladite première armature rigide (3) est uniquement déplaçable suivant un mouvement de translation sensiblement parallèle par rapport à ladite seconde armature rigide (6), ledit container d'alimentation (2) étant muni d'une sortie (7), lequel, via une ou plusieurs valves contrôlables (8), communique avec un dispositif d'épandage (10) pour répandre ledit matériau sur le sol, **caractérisé en ce que** ledit dosage est automatiquement et continûment ajustable pendant le fonctionnement de ladite machine en se basant sur la quantité de matériau présent dans la trémie d'alimentation, laquelle quantité est déterminable uniquement par le signal de sortie (16) délivré par un moyen sensible au déplacement (5), ledit signal de sortie (16) étant uniquement une fonction du déplacement de translation parallèle de ladite première armature rigide (3) par rapport à ladite seconde armature rigide (6).

2. Système selon la revendication 1, **caractérisé en ce que** ladite mesure du déplacement de translation et parallèle de ladite première armature rigide (3) par rapport à ladite seconde armature rigide (6) est effectuée par l'intermédiaire d'un moyen sensible au déplacement (5) placé sensiblement entre un point donné sur ladite première armature rigide (3) et un point donné sur ladite seconde armature rigide (6).

3. Système selon les revendications 1 ou 2, **caractérisé en ce que** ledit ajustement automatique du dosage est effectué de manière continue en cours de fonctionnement à l'aide de la ou desdites valves contrôlables (8), lesdites valves (8) recevant un signal de sortie traité (15) dérivé d'un signal de sortie (16) provenant dudit moyen sensible au déplacement (5).

4. Système selon l'une quelconque des revendications précédentes, **caractérisé en ce que** ledit signal de sortie traité (15) est une fonction de la distance entre le changement réel de masse de matériau dans ledit container d'alimentation (2) sur un intervalle de temps spécifique et un changement cible de ladite masse sur ledit intervalle de temps spécifique.

5. Système selon l'une quelconque des revendications précédentes, **caractérisé en ce que** ledit intervalle de temps spécifique est automatiquement augmenté si ledit changement réel de masse au cours dudit intervalle de temps spécifique est inférieur à une première valeur seuil donnée et/ou la distance couverte par ladite machine dans ledit intervalle de temps est inférieure à une seconde valeur seuil donnée.

6. Système selon les revendications 4 ou 5, **caractérisé en ce que** ledit changement cible de masse sur ledit intervalle de temps spécifique est déterminé en se basant sur un dosage cible de matériau, la vitesse de ladite machine par rapport au sol et les caractéristiques d'épandage de la répandeuse (10) spécifique qui est utilisée.
